# EUROPEAN PATENT APPLICATION

(11) **EP 4 657 029 A1**
(43) Date of publication of application: **03.12.2025**
(21) Application number: 24179422.1
(22) Date of filing: 31.05.2024
(51) Int. Cl.: G01D 11/24, G01D 9/00

(54) **THERMAL PROTECTION CASING FOR DATA LOGGER**

(71) Applicant: Technosoft Srl, 20068 Milano Peschiera Borromeo (IT)
(72) Inventor: ROSSI, Sergio, 20068 Peschiera Borromeo (MI) (IT); ARALDI, Lorenzo, 20068 Peschiera Borromeo (MI) (IT)
(74) Representative: Santarelli

(57) **Abstract**

The invention is related to a thermal protection device (1, 1') for a data logger (9, 9'), configured to protect said data logger (9, 9') from an external temperature, said thermal protection device comprising a casing (2, 2') formed from a thermal insulator and defining a first housing (3, 3') adapted to house said data logger (9, 9'), and a second housing (4, 4') fluidly sealed from said first housing (3, 3'), characterized in that said thermal protection device further comprises means for absorbing thermal energy entering said casing (2, 2') from outside said casing (2, 2'), said thermal energy absorbing means being housed in said second housing (4, 4'), so that thermal energy entering said casing (2, 2') from outside said casing (2, 2') being absorbed by said thermal energy absorbing means before arriving at the first housing (3, 3'), said first housing (3, 3') being separated from said second housing (4, 4') by a partition delimiting said first housing (3, 3'), said second housing (4, 4') being implemented such that it at least partially surrounds said first housing (3, 3') so that thermal energy entering said casing (2, 2') from outside said casing (2, 2') passes through the second housing (4, 4') before arriving at the first housing (3, 3').

## Description

### Field of the invention

The present invention is in the field of datalogger devices, also called data logger devices or data loggers. More particularly, the present disclosure is related to a thermal protection device for data logger configured to protect said data logger from external temperature during the use of this data logger in high temperature conditions.

Such thermal protection device together with data loggers can be used for example in the field of agriculture, pharmaceutical industry or food.

### Background of the invention

For years, data loggers have been implemented in every field where it can be useful to measure and record various parameters. Data loggers can be used for example in the field of agriculture, pharmaceutical industry or food, tipically in sterilisation and pasteurisation processes.

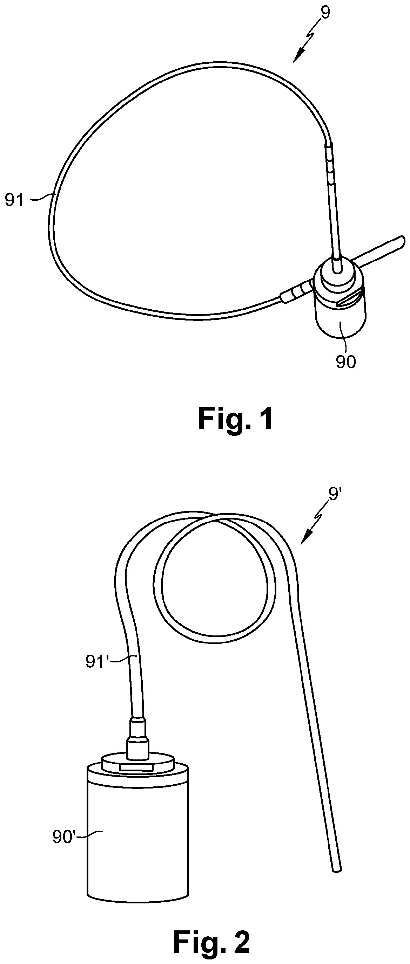

A conventional data logger, also called datalogger or data recorder, is an electronic device that records data over time or about location. To achieve that, they are generally battery-powered, and are equipped with a microprocessor, an internal memory for data storage, and one or more sensors. As visible in data loggers 9, 9' illustrated in figures 1 and 2, all the electronic components such as the microprocessor, which can be a part of a processing unit, are generally incorporated in a main body 90, 90'. Such main body can for example comprise a base surmonted by a cover. This main body can be watertight.

Generally, data loggers also comprise one or more probes 91, 91'. Those probes can be of different types, as for example rigid, collapsible or flexible, mainly depending on the context of use of the data logger.

Thus, a conventional data logger, contains relatively fragile electronics whose operation may be disrupted or which can even be damaged, at about 130°C.

However, in some cases, data loggers can be exposed to higher temperatures and for a relatively long period, for example for measuring and recording parameters in high-temperature environments.

For this kind of situation, it is known to house the data logger in a casing formed by an insulation material in order to protect for a short period the data logger.

However, in the case of external temperature, also called outside temperature, exceeding the temperature of the contents inside the thermal protection device, heat will be transmitted through the casing to the contents with a speed proportional to the temperature difference between the outside and the contents. Thus, after a defined period, the temperature inside the casing will reach critical levels for the data logger and will represent a risk for the data logger.

There is therefore a need to provide a solution to protect such data logger from external environment in order to not limit the range of use of this device. There is also a need to provide a solution that is cheap and easy to use and to implement.

### Summary of the invention

The aim of the solution presented below is to provide a solution to at least one of the problem listed above.

For this purpose, the invention is related to a thermal protection device for a data logger, configured to protect said data logger from an external temperature, said thermal protection device comprising a casing formed from a thermal insulator and defining a first housing adapted to house said data logger, and a second housing fluidly sealed from said first housing, said thermal protection device further comprising means for absorbing thermal energy entering said casing from outside said casing, said thermal energy absorbing means being housed in said second housing, so that thermal energy entering said casing from outside said casing being absorbed by said thermal energy absorbing means before arriving at the first housing, said first housing being separated from said second housing by a partition delimiting said first housing, said second housing being implemented such that it at least partially surrounds said first housing so that thermal energy entering said casing from outside said casing passes through the second housing before arriving at the first housing.

The fact that the thermal energy entering said casing from outside said casing is absorbed by said thermal energy absorbing means before arriving at the first housing create a thermal protection for the data logger as the rise of the internal temperature into the casing is limited by the absorption and the rise of the temperature into the first housing is even more limited.

Thus, the implementation of such a thermal protection device prevent the risk of exposing the data logger to conditions that threaten its integrity.

According to at least one embodiment of the invention, said partition delimiting said first housing has a parallelepiped shape formed by a bottom wall, four side walls, and a removable top wall forming a cover, and said second housing is formed around the four side walls and said bottom wall. According to at least one embodiment of the invention, said top wall forming a cover comprises a through hole configured to allow passage of a probe of said data logger.

According to at least one embodiment of the invention, said second housing is provided in the form of a heat transfer fluid tank comprising a fluid inlet opening onto an outer surface of said casing, and a fluid outlet opening onto an outer surface of said casing. Moreover, thermal energy absorbing means are in the form of a heat transfer fluid.

According to at least one embodiment of the invention, the heat transfer fluid is a PCM, preferably water.

According to at least one embodiment of the invention, said fluid inlet is closed by a removable tap. According to at least one embodiment of the invention, said fluid outlet is a pressure relief valve allowing water vaporized by the absorption of heat energy from outside of said casing to be discharged.

According to at least one embodiment of the invention, the device further comprises means for controlling the vaporization of said heat transfer fluid by the absorption of heat energy from outside of said casing inside said tank, in the form of a pressure control valve.

According to at least one embodiment of the invention, the device further comprises complementary insulating means provided inside said first housing and/or said second housing so as to limit the absorption of heat energy from the outside by said thermal energy absorbing means and/or by said data logger.

According to at least one embodiment of the invention, said complementary insulating means comprise an insulator from among rock wool, glass wool, aerogel, expanded polystyrene and a vacuum compartment.

According to at least one embodiment of the invention, said casing has one of the following shapes: cylindrical, parallelepipedal, spherical.

According to at least one embodiment of the invention, said thermal insulator of said casing is selected from among rock wool, glass wool, aerogel, expanded polystyrene and a vacuum compartment.

According to at least one embodiment of the invention, said thermal insulator of said casing is selected from from plastic material such as POM, PA, PETP, PC, PPO, PMMA, PPSU, PES, PEI, PSU, PAI, PPS, PVDF, PTFE, STABIL PEEK, PE-HUMW.

The invention also concerns an assembly comprising a thermal protection device according to any of preceding embodiments, and a data logger housed in said first housing.

### List of figures

The invention, as well as its various advantages, will be more easily understood in the light of the following description of illustrative and non-limiting embodiments thereof, and of the appended drawings among which:
- Figure 1 is a schematical view of a first type of a known data logger
- Figure 2 is a schematical view of an second type of known data logger ;
- Figure 3 is a cross sectional view of a thermal protection device according to a first embodiment of the invention ;
- Figure 4 is a perspective view of a thermal protection device according to a second embodiment of the invention ;
- Figure 5 is a perspective view of a part of a thermal protection device according to the second embodiment of the invention ;
- Figure 6 is a perspective view of an other part of a thermal protection device according to the second embodiment of the invention ;
- Figure 7 is a perspective top view of an other part of a thermal protection device according to the second embodiment of the invention, and
- Figure 8 is a perspective bottom view of the part illustrated in figure 7.

### Detailed description of an embodiment of the invention

As detailed above, the aim of the solution object of the invention is to provide a solution to protect a data logger from external environment in order to not limit the range of use of this device, in the form of an assembly comprising a thermal protection device and a data logger housed in the thermal protection device.

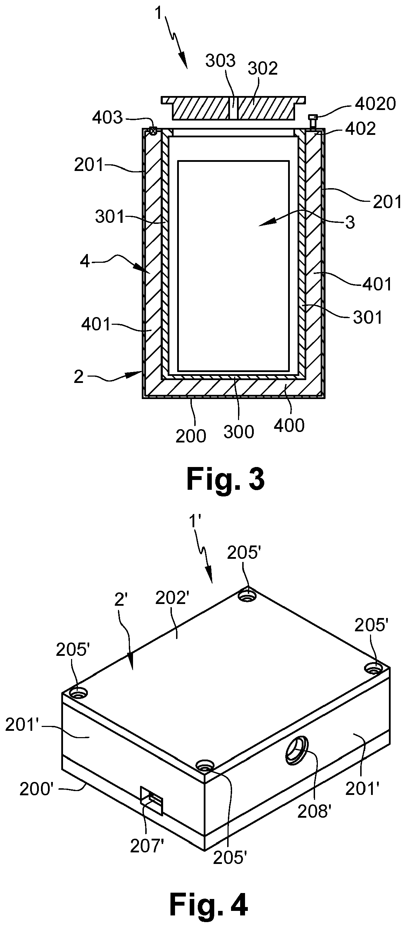

To achieve this, a first embodiment of the invention, illustrative and non-limitative, is detailed below in relation with figure 3.

As illustrated in this figure 3, the thermal protection device 1, configured to protect a data logger from an external temperature, comprises a casing 2 formed from a thermal insulator and defining a first housing 3 and a second housing 4.

The casing can, for example, have one of the following shapes: cylindrical, parallelepipedal, spherical. In other alternatives, the casing could also have an polygonal shape or an irregular shape. Concerning the thermal insulator of the casing it can be selected from among rock wool, glass wool, aerogel, expanded polystyrene, stainless steel, alluminium, and a vacuum compartment.

It could also be selected from plastic material such as POM, PA, PETP, PC, PPO, PMMA, PPSU, PES, PEI, PSU, PAI, PPS, PVDF, PTFE, STABIL PEEK, PE-HUMW.

The first housing 3 is adapted to house the data logger and is separated from the second housing 4 by a partition delimiting this first housing 3.

In this embodiment, the first housing 3 has a parallelepiped shape formed by a bottom wall 300, four side walls 301, and a removable top wall forming a cover 302.

In other words, the partition as a shape from an inside first housing's point of view which is parallelepipedic.

More particularly, the top wall forming a cover 302 is removable in order to insert the data logger into the first housing or to remove he data logger from the first housing.

This cover comprises a through hole 303 configured to allow passage of a probe of the data logger when the data logger is housed into the first housing.

According to the invention, the thermal protection device further comprises means for absorbing thermal energy entering in the casing 2 from outside.

These thermal energy absorbing means are housed in the second housing 4, so that thermal energy entering in the casing 2 from the external environment are absorbed by the thermal energy absorbing means before arriving at the first housing 3.

To achieve this, the second housing 4 is implemented such that it at least partially surrounds the first housing 3 so that thermal energy entering into the casing 2 from outside the casing 2 passes through the second housing 4 before arriving at the first housing 3 and are absorbed by the thermal energy absorbing means.

More particularly, in this embodiment, the second housing 4 is formed around the four side walls 301 and the bottom wall 300. Thus, it can be considered that in this embodiment the second housing as a bottom part 400 and four side parts 401.

It is to be noticed that, according to the invention, the second housing 4 is fluidly sealed from the first housing 3.

In this embodiment, and as visible in figure 3, the second housing 4 is provided in the form of a heat transfer fluid tank comprising a fluid inlet 402 opening onto an outer surface of the casing 2, and a fluid outlet 403 opening onto an outer surface of the casing 2. As visible, the fluid inlet 402 is closed by a removable tap 4020.

More particularly, in this embodiment, the heat transfert fluid is a PCM, for phase change material. This PCM can be of diverse types. For example, in this embodiment, the chosen PCM is water which is the cheapest and easiest to implement.

Moreover, in this embodiment, the fluid outlet 403 is a pressure relief valve allowing water vaporized by the absorption of heat energy arriving from outside of said casing 2 into the tank to be discharged. In other words, and more precisely, when the heat energy arrives from the external environment to the second housing 4 by traversing the casing 2, it will be absorbed by the thermal energy absorbing means which are composed, in this embodiment, by water. Consequently, temperature of water will rise and reach the vaporization temperature. In the meantime, pressure inside the second housing will also rise. In order to avoid risks of over-pressure inside the second housing, a pressure relief valve is implemented to discharge the vaporized water and maintain a convenient pressure inside the second housing.

In line with the above, in this embodiment, the thermal protection device further comprises means for controlling the vaporization of the heat transfer fluid in the form of a pressure control valve.

As a result, a user can choose the desired pressure or the pressure not to exceed in the second housing and set the pressure relief valve in this way.

In an alternative embodiment, not illustrated in figure 3, the thermal protection device can further comprise complementary insulating means provided inside the first housing and/or inside the second housing so as to limit the absorption of heat energy from the external environment by the thermal energy absorbing means and/or by the data logger.

These complementary insulating means can comprise an insulator from among rock wool, glass wool, aerogel, expanded polystyrene and a vacuum compartment.

A second embodiment of the invention, illustrative and non-limitative, is detailed below in relation with figure 4 to figure 8.

As illustrated in figure 4, the thermal protection device 1', configured to protect a data logger from an external temperature, comprises a casing 2' formed from a thermal insulator and defining a first housing 3' and a second housing 4'.

In this embodiment also, the casing 2' has a parallelepipedal shape formed by a bottom wall 200', four side walls 201', and a top wall 202'.

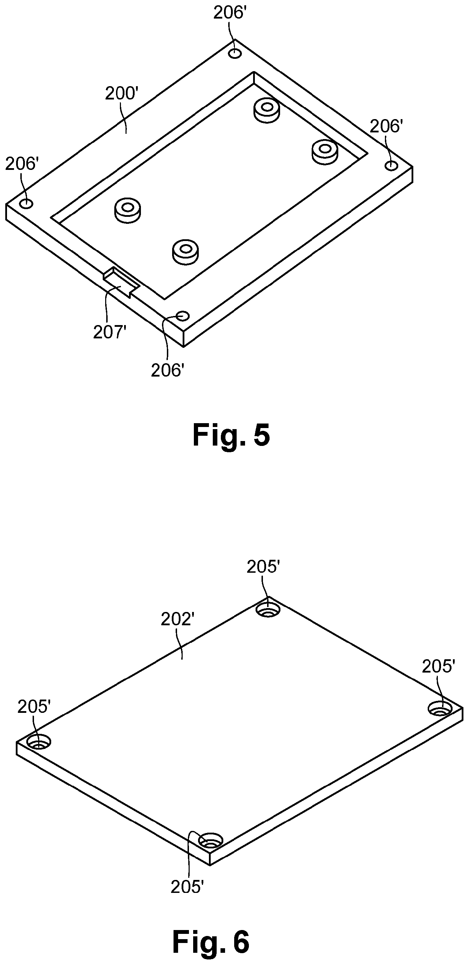

As more illustrated in figure 5, the bottom wall 200' has a perpendicular shape and comprises four through openings 206' formed in the corners and each adapted to be located in front of one opening 2060' located in an angle formed by the bottom of the contact line of two side wall 201'. Thus, fixation means such as screws or rivet can be inserted in the four through openings 206' and openings 2060' in order to fix the bottom wall 200' to the side walls 201'.

In the same way, and as more illutrated in figure 6, the top wall 202' has a perpendicular shape and comprises four through openings 205' formed in the corners and each adapted to be located in front of one opening 2050' located in an angle formed by the top of the contact line of two side wall 201'. Thus, fixation means such as screws or rivet can be inserted in the four through openings 205' and openings 2050' in order to fix the top wall 202' to the side walls 201'.

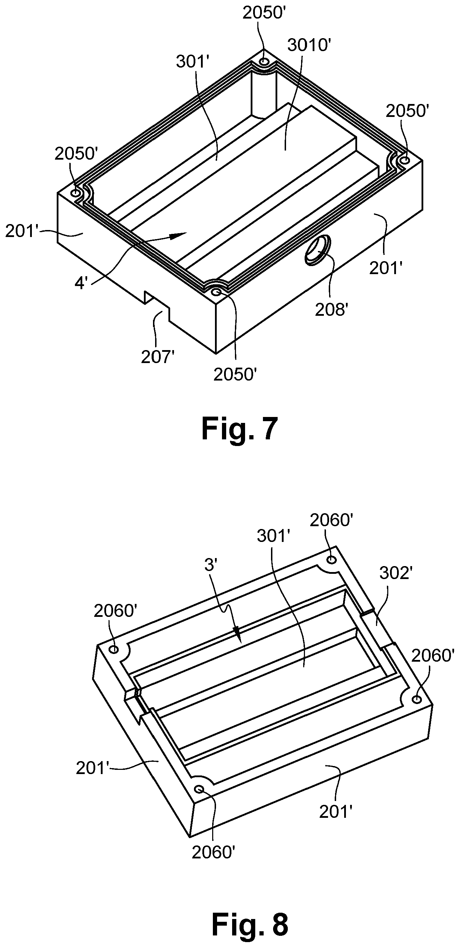

As illustrated in figures 7 and figure 8, one of the four side walls 201' comprises a hole 208' adapted to fix a pressure control valve. One another hole 302' is formed on an other of the four side walls 201' and is adapted to let pass the probe of the data logger.

An other hole 207' is also formed on an other of the four side walls 201' and is adapted to cooperate with an USB interface in order to allow the communication between the data logger and an external user.

The thermal insulator of the casing 2' in this embodiment can be selected from among rock wool, glass wool, aerogel, expanded polystyrene, stainless steel, alluminium, and a vacuum compartment. It could also be selected from plastic material such as POM, PA, PETP, PC, PPO, PMMA, PPSU, PES, PEI, PSU, PAI, PPS, PVDF, PTFE, STABIL PEEK, PE-HUMW.

The first housing 3' is adapted to house the data logger and is separated from the second housing 4' by a partition 301' delimiting this first housing 3'.

In this embodiment, this partition 301' has a non linear shape and connect the four sides 201' so that the second housing 4' is fluidly sealed from the first housing 3'.

Thus, in this embodiment, the first housing 3' is delimited by the partition 301', the four sides 201' and the bottom wall 200', while the second housing 4' is delimited by the partition 301', the four sides 201' and the top wall 202'.

According to the invention, the thermal protection device further comprises means for absorbing thermal energy entering in the casing 2' from outside.

These thermal energy absorbing means are housed in the second housing 4', so that thermal energy entering in the casing 2' from the external environment are absorbed by the thermal energy absorbing means before arriving at the first housing 3'.

To achieve this, the second housing 4' is implemented such that it at least partially surrounds the first housing 3' so that thermal energy entering into the casing 2' from outside the casing 2' passes through the second housing 4' before arriving at the first housing 3' and are absorbed by the thermal energy absorbing means.

More particularly, in this embodiment, the second housing 4' is formed on the top of the partition 301'.

In this embodiment, thermal energy absorbing means are in the form of a heat transfer fluid.

More particularly, in this embodiment, the heat transfert fluid is a PCM, for phase change material. This PCM can be of diverse types. For example, in this embodiment, the chosen PCM is water which is the cheapest and easiest to implement.

In view of the shape of the partition 301', the water can for example be placed into two tubes located from each side of a median protrusion 3010'.

In an alternative embodiment, not illustrated in figures 4 to 8, the thermal protection device can further comprise complementary insulating means provided inside the first housing and/or inside the second housing so as to limit the absorption of heat energy from the external environment by the thermal energy absorbing means and/or by the data logger.

These complementary insulating means can comprise an insulator from among rock wool, glass wool, aerogel, expanded polystyrene and a vacuum compartment.

In an other alternative, the thermal protection device could also comprise an external additional casing formed from a thermal insulator and configured to house the casing formed from a thermal insulator in order to amplify the thermal protection, for example in case of use in extreme conditions.

It is to be noticed that both data loggers illustrated in figure 1 and figure 2 can be used for both detailed embodiments.

However, other types of data loggers could be used in these embodiments. Moreover, other embodiments of the invention could be used together with both data loggers illustrated.

## Claims

1. A thermal protection device (1, 1') for a data logger (9, 9'), configured to protect said data logger (9, 9') from an external temperature, said thermal protection device comprising a casing (2, 2') formed from a thermal insulator and defining a first housing (3, 3') adapted to house said data logger (9, 9'), and a second housing (4, 4') fluidly sealed from said first housing (3, 3'), **characterized in that** said thermal protection device further comprises means for absorbing thermal energy entering said casing (2, 2') from outside said casing (2, 2'), said thermal energy absorbing means being housed in said second housing (4, 4'), so that thermal energy entering said casing (2, 2') from outside said casing (2, 2') being absorbed by said thermal energy absorbing means before arriving at the first housing (3, 3'), said first housing (3, 3') being separated from said second housing (4, 4') by a partition delimiting said first housing (3, 3'), said second housing (4, 4') being implemented such that it at least partially surrounds said first housing (3, 3') so that thermal energy entering said casing (2, 2') from outside said casing (2, 2') passes through the second housing (4, 4') before arriving at the first housing (3, 3').

2. Thermal protection device (1) according to claim 1, **characterized in that** said partition delimiting said first housing (3) has a parallelepiped shape formed by a bottom wall (300), four side walls (301), and a removable top wall forming a cover (302), and **in that** said second housing (4) is formed around said four side walls (301) and said bottom wall (300).

3. Thermal protection device (1) according to claim 2, **characterized in that** said top wall forming a cover (302) comprises a through hole (303) configured to allow passage of a probe of said data logger (9, 9').

4. Thermal protection device (1, 1') according to one of the preceding claims, **characterized in that** said second housing (4, 4') is provided in the form of a heat transfer fluid tank comprising a fluid inlet (402) opening onto an outer surface of said casing (2, 2'), and a fluid outlet (403) opening onto an outer surface of said casing (2, 2'), and **in that** thermal energy absorbing means are in the form of a heat transfer fluid.

5. Thermal protection device (1) according to claim 4, **characterized in that** the heat transfer fluid is a PCM, preferably water.

6. Thermal protection device (1) according to claim 4 or 5, **characterized in that** said fluid inlet (402) is closed by a removable tap (4020).

7. Thermal protection device (1) according to one of claims 4 to 6, **characterized in that** said fluid outlet (403) is a pressure relief valve allowing water vaporized by the absorption of heat energy from outside of said casing (2) to be discharged.

8. Thermal protection device (1) according to one of claims 4 to 7, **characterized in that** it further comprises means for controlling the vaporization of said heat transfer fluid by the absorption of heat energy from outside of said casing (2) inside said tank, in the form of a pressure control valve.

9. Thermal protection device (1) according to any one of preceding claims, **characterized in that** it further comprises complementary insulating means provided inside said first housing (3, 3') and/or said second housing (4, 4') so as to limit the absorption of heat energy from the outside by said thermal energy absorbing means and/or by said data logger (9, 9').

10. Thermal protection device (1, 1') according to claim 9, **characterized in that** said complementary insulating means comprise an insulator from among rock wool, glass wool, aerogel, expanded polystyrene and a vacuum compartment.

11. Thermal protection device (1, 1') according to one of the preceding claims, **characterized in that** said casing has one of the following shapes: cylindrical, parallelepipedal, spherical.

12. Thermal protection device (1, 1') according to one of the preceding claims, **characterized in that** said thermal insulator of said casing is selected from among rock wool, glass wool, aerogel, expanded polystyrene, stainless steel, alluminium, a vacuum compartment, or from plastic material.

13. Assembly comprising a thermal protection device (1, 1') according to any of claims 1 to 12, and a data logger (9, 9') housed in said first housing (3, 3').
